# EUROPEAN PATENT SPECIFICATION

(11) **EP 2 151 380 B1**
(45) Date of publication and mention of the grant of the patent: **23.09.2015**
(21) Application number: 09161828.0
(22) Date of filing: 03.06.2009
(51) Int. Cl.: B64C 27/20, B64C 39/02

(54) **Integrated duct design for an unmanned aerial vehicle**
Integriertes Kanaldesign für ein unbemanntes Flugzeug
Conception de conduit intégré pour un véhicule aérien sans pilote

(30) Priority: 06.08.2008 US 187112
(43) Date of publication of application: 10.02.2010
(73) Proprietor: Honeywell International Inc., Morristown, NJ 07962 (US)
(72) Inventor: Entsminger, Adam, Morristown, NJ 07962-2245 (US); Collette, Daniel Ross, Morristown, NJ 07962-2245 (US)
(74) Representative: Houghton, Mark Phillip

(56) References cited:
- EP-A1- 0 553 490
- EP-A2- 2 147 858
- EP-A2- 2 151 379
- EP-A2- 2 151 381
- US-A- 2 077 471
- US-A- 4 196 877
- US-B1- 6 575 402

## Description

### FIELD

The present invention relates generally to an integrated duct design for a ducted fan vehicle. More specifically, the invention relates to an unmanned aerial vehicle (UAV) having a duct capable of storing electronics and equipment inside the duct.

### BACKGROUND

Unmanned aerial vehicles may have at least one ducted fan and a fan engine to drive the fan blades. The ducted fan produces an airstream that may enable the UAV to hover or move translationally parallel to the ground.

UAV vehicles may be used to transport equipment, perform surveillance, obtain information from sensors, place sensors or other payload in a dangerous or inaccessible area, or to perform contaminant testing. In order to reach the target destination, and to perform the desired task, UAVs may need to store equipment such as avionics, controls, payload, and sensing equipment.

EP 2 147 858 A2 by Honeywell International Inc. discloses a ducted fan core for an unmanned aerial vehicle that accommodates a wide variety of payloads and includes a frame, attached to which are an engine, gearbox assembly, a fan, and control vanes. The frame includes a plurality of connects or electrical traces, which are used to removably attach a variety of pods.
U.S. Patent No. 2,077,471 to Fink discloses an aircraft that includes a housing and propellers mounted for rotation in planes disposed substantially midway of the upper and lower sides of the housing.
U.S. Patent No. 6,575,402 to Scott discloses a cooling system for a hybrid aircraft, which includes a body with a toroidal portion.
EP 0 553 490 to Sky Disc Holding SA discloses an aircraft that has a housing essentially shaped as a circular wing.
U.S. Patent No. 4,196,577 to Mutrux discloses an aircraft that comprises a generally annular wing structure surrounding a circular central structure to form an annular air duct.

Some UAVs may store such equipment in external pods attached to the duct. These pods may cause a shift in the center of gravity, may create negative interference with airflow characteristics inside the duct by blocking air intake and exhaust, and may create additional drag on the UAV when the UAV is in forward flight. Additionally, the added weight of the equipment may require additional engine capacity and fuel storage capacity. The additional engine capacity and additional fuel that must be carried further add to the weight, and may therefore decrease the fuel efficiency of the vehicle.

Alternatively, some UAVs may store equipment inside the duct. UAVs may typically have a circular duct. Storing equipment inside the duct may require that the thickness and the diameter of the circular duct be increased. Increasing the diameter and the thickness of the circular duct may affect a large number of design criteria for the UAV, such as the center of gravity, engine size, thrust power, fuel requirements, weight, controls, as well as other possible effects.

Therefore, there is a need for an improved means of storing equipment on a ducted fan aerial vehicle.

### SUMMARY

The present disclosure describes a ducted-fan unmanned air vehicle (UAV) having space inside the duct for carrying equipment or cargo. UAVs may carry equipment on board, such as avionics equipment, control equipment, sensors, and fuel. Traditionally, equipment carried by the UAV may be stored in removable or fixed storage pods attached to the duct of the UAV. These storage pods may create interference with airflow and may cause losses in overall efficiency due to the disturbance of the airflow around the UAV. One approach to providing increased area for storing equipment and payload on the UAV was to create a duct having space inside it. If additional storage was necessary, the size of the outer diameter of the circular duct could be expanded.

An improved system and method for storing equipment on the UAV creates additional space between the inner and outer wall of the duct at specified intervals along the circumference of the duct. This may create "corners" on the duct having increased storage capacity. Using these corners on the duct of the UAV may result in improved fuel efficiency and thrust of the UAV fan over other systems in which pods are attached to the circumference of the duct of the UAV, or in systems in which the outer diameter of the duct was increased to accommodate additional equipment inside the duct.

In another example not covered by the present invention, the area on the duct used to store equipment may be further increased by raising the corners of the duct in a direction substantially parallel to the axis of rotation of the fan.

Creating space inside the duct in corners located on the perimeter of the duct of the UAV and raising the corners of the duct in a direction parallel to the axis of rotation of the fan may result in increased efficiency, decreased turbulence, and improved thrust over systems having equivalent cargo capacity in which the duct outer perimeter is circular or in which storage pods are attached to the perimeter of the duct of the UAV.

Other objects, advantages and novel features, and further scope of applicability of the present disclosure will be set forth in part in the detailed description to follow, taken in conjunction with the accompanying drawings, and in part will become apparent to those skilled in the art upon examination of the following, or may be learned by practice of the disclosure. Further, it is understood that this summary is merely an example and is not intended to limit the scope of the invention as claimed.

### BRIEF DESCRIPTION OF THE DRAWINGS

Presently preferred embodiments are described below in conjunction with the appended drawing figures, wherein like reference numerals refer to like elements in the various figures, and wherein:
Fig. 1a is a pictorial representation of a top view of a ducted fan UAV having a substantially square outer duct, according to an example.
Fig. 1b is a pictorial representation of a perspective view of a ducted fan UAV having a substantially square perimeter, according to an example.
Fig. 1c is a pictorial representation of a side view of a ducted fan UAV having a substantially square perimeter, according to an example.
Fig. 1d is a pictorial representation of a side view of a ducted fan UAV having a substantially square perimeter and rotated 45° around the axis of rotation from the view of Fig. 1c, according to an example.
Fig. 1e is a graph of two cross-sections of the duct of the UAV having a substantially square perimeter, according to an example.
Figures 2a-2e represent an example of a ducted fan UAV not covered by the present invention.

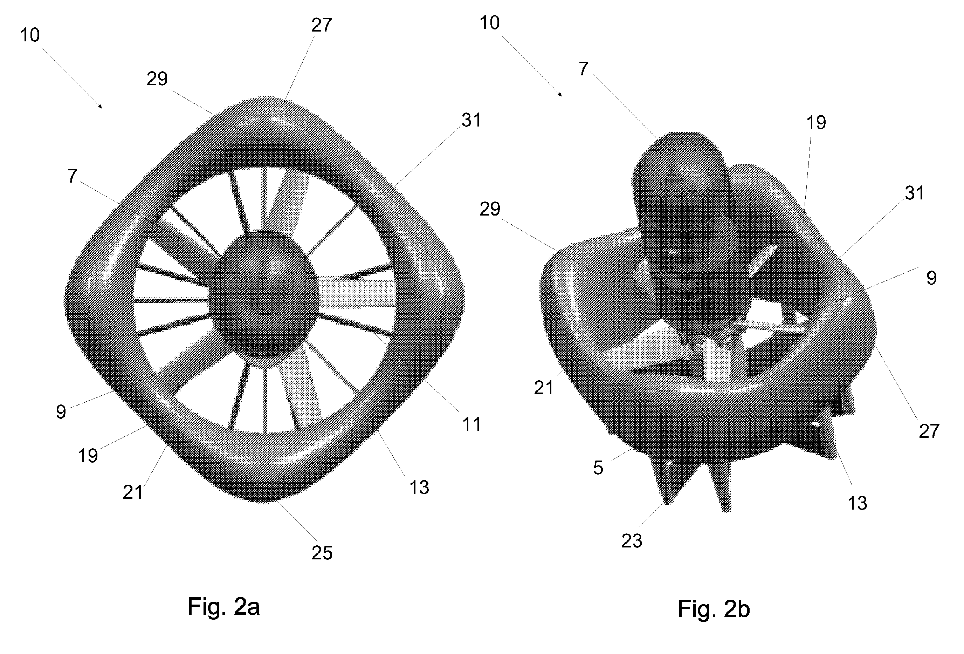

Fig. 2a is a pictorial representation of a top view of a ducted fan UAV having a substantially square perimeter and raised corners, according to an example.
Fig. 2b is a pictorial representation of a perspective view of a ducted fan UAV having a substantially square perimeter and raised corners, according to an example.

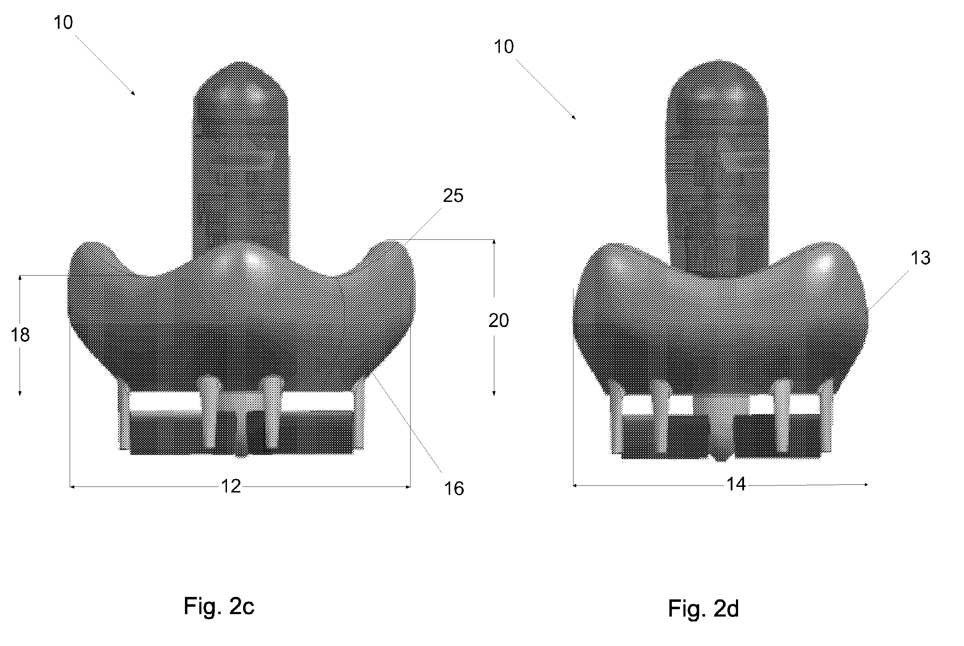

Fig. 2c is a pictorial representation of a side view of a ducted fan UAV having a substantially square perimeter and raised corners, according to an example.

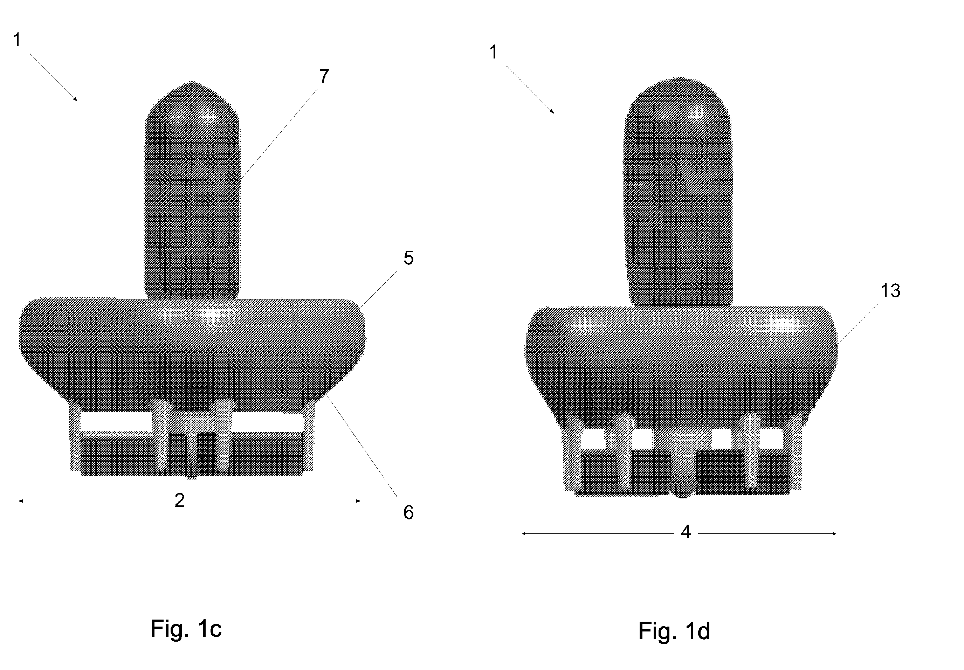

Fig. 2d is a pictorial representation of a side view of a ducted fan UAV having a substantially square perimeter and raised corners, and rotated 45° around the axis of rotation from the view of Fig. 1c, according to an example.

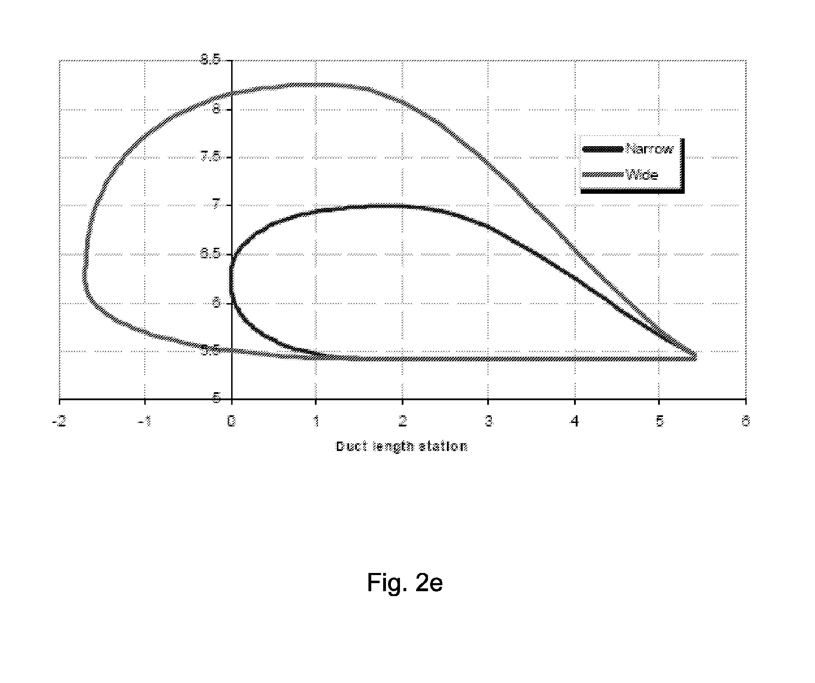

Fig. 2e is a graph of two cross-sections of the duct of the UAV having a substantially square perimeter and raised corners, according to an example.

### DETAILED DESCRIPTION

Ducted-fan UAVs are known for their superior stationary aerodynamic hovering performance, three-dimensional precision position hold, low speed flights, precision vertical take-off and landing ("VTOL") and safe close-range operations. Ducted fan air-vehicles may be preprogrammed to perform operations autonomously, or they may be controlled by a human operator. Therefore, ducted fan air-vehicles may be unmanned aerial vehicles.

UAVs may have avionics equipment on board to control the flight and operation of the UAV. For instance, the avionics may control the direction, flight, stability compensation, and other aspects of flight control. Additionally, UAVs may carry a variety of equipment on board tailored to the mission the UAVs are assigned to accomplish. UAVs may carry sensors on board to obtain information about surroundings, or the UAVs may carry a payload to be deposited at a target site. The UAV engine to drive the UAV requires that fuel be carried on board the UAV. The avionics equipment, sensors, payload, and fuel may be stored on the UAV.

The present invention describes a system and a method of creating increased storage on the UAV for a given inner diameter of the duct of the UAV. The duct of the UAV is shaped to provide additional storage between the inside and outside walls of the duct by creating a larger area between the inside and outside wall of the duct at intervals along the circumference of the duct.

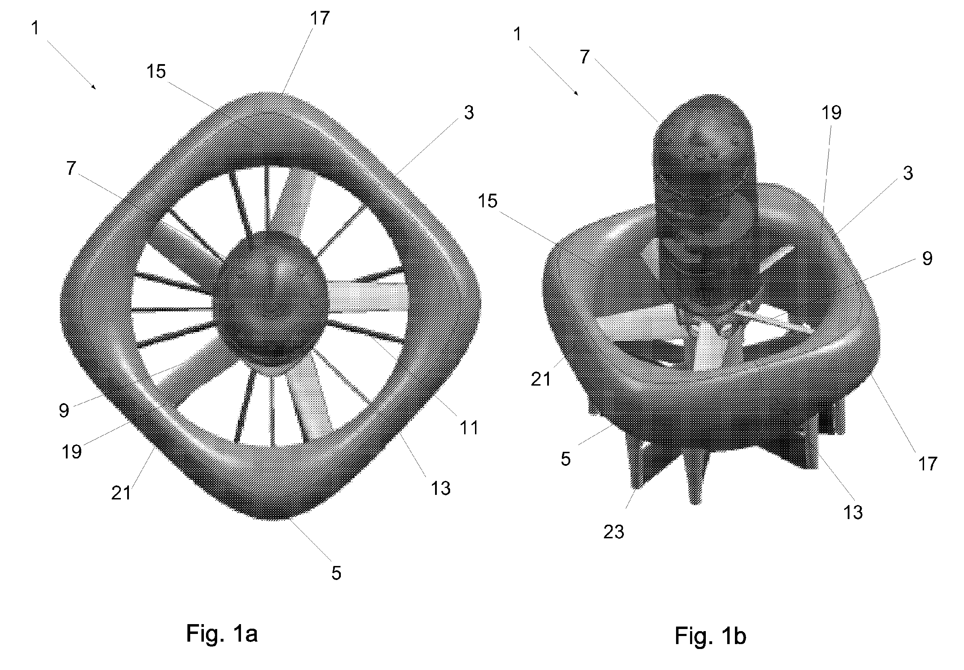

For instance, as shown in Fig. 1a, the cross-section of the duct 3 on a plane substantially perpendicular to the axis of rotation of the fan may have a substantially square shape. While the inner diameter of the duct 3 of the UAV 1 may remain circular, the outer profile of the duct may have a square shape. The additional interior space created between the inner and outer walls of the duct provides additional storage for equipment that may be carried on the UAV 1. The duct 3 shown in Figs 1a-d has a substantially square perimeter; however, the duct 3 may have other numbers of corners 5.

The UAV 1 of Figs. 1a-1d has a fan with fan blades 9 driven by fan engine 7. The fan stators 11 may hold the duct 3 stationary in relation to the fan engine 7. The duct 3 has duct corners 5 and duct side walls 13. The duct side walls 13 may be thinner than the duct corners 5. The increased thickness of the duct corners 5 provides additional storage space for equipment to be stored on the UAV 1.

Fig. 1b shows a side view of the UAV 1. The landing gear 23 may be located at the base of the UAV 1, and may increase the stability of the UAV 1 during landing. As shown in Fig. 1b, the top surface of the duct 3 may have a substantially flat profile.

Figs. 1c and 1d show side views of the UAV 1 indicating the difference between the length 2 from one corner 5 to the opposite corner 5, and the length 4 from one duct side wall 13 to the opposite duct side wall 13.

The length 2 of the UAV 1 shown in Figs. 1a-d is approximately 27% greater than length 4. However, lengths 2, 4 may vary and length 2 may ideally be in the range of 10-40% greater than length 4. The difference between lengths 2, 4 affects the amount of cargo space located on the UAV 1 in a direction substantially perpendicular to the axis of rotation of the fan, and may affect overall vehicle performance. Therefore, the difference between lengths 2, 4 may be varied based on the storage requirements of the UAV 1 and the desired vehicle performance specifications.

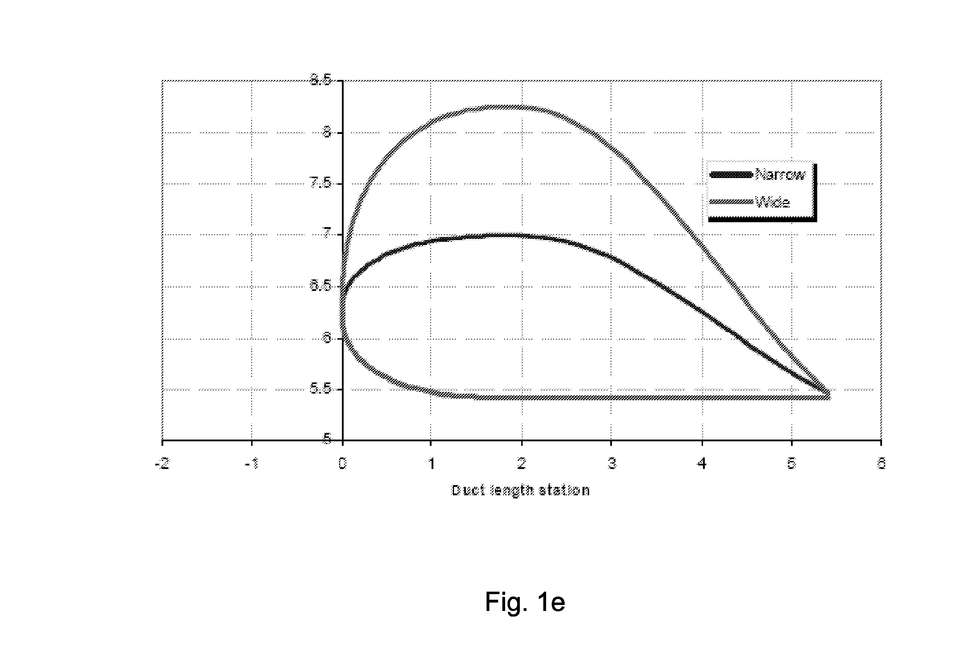

The thickness of the duct 3 may taper down to the base 6. This tapered shape may provide improved vehicle performance, discussed further with respect to Figs. 1e.

In laboratory testing, UAV 1 returned similar values for thrust, fuel efficiency, and stability to the values obtained for a traditional circular duct without duct corners 5. In some testing scenarios, UAV 1 actually showed improved thrust. This indicates that providing storage on the UAV 1 inside a square duct having corners 5 may provide storage space without significantly negatively affecting the airflow characteristics and fan efficiency of the UAV 1. For instance, in laboratory tests on a UAV 1 having dimensions of 14" square and a weight of approximately 18.6 pounds, experimental data indicated that the thrust obtained by the fan was improved over a UAV having a traditional circular duct when both were in hover mode. In forward flight, the square UAV 1 performed slightly worse than the traditional circular duct.

The increased thrust may be attributed to the increased speed of the airflow as it flows over the thicker section of the duct corners 5. Because air may travel a longer distance over the lip of the duct 3 to the intake of the fan, the airspeed may increase and the pressure at the corners 5 may decrease. These factors may contribute to the improved overall thrust of the UAV 1.

Because the of the increased capacity in the corners 5 of the duct 3, the center of gravity of the UAV 1 may be shifted downwardly relative to the top surface of the duct 3. In order to maintain the stability of the UAV 1, this shift in the center of gravity may be compensated for by shifting the engine 7 upward along the axis or rotation, or by shifting another component of the UAV 1 upward in order to compensate for the shift caused by storing equipment in the duct corners 5.

Fig. 1e shows the cross-section of the duct 3 at the sidewall 13 and the corner 5. The increased thickness of the duct 3 at the corners 5 provides the additional storage space for electronics and other equipment on the UAV 1. As air passes over the thicker duct corner 5, the airspeed is increased compared to the air passing over the thinner duct side wall 13. This results in areas of relatively lower pressure and higher airspeed at the duct corners 5, contributing to improved airflow and thrust for the UAV 1. Additionally, the cross-section view of both the duct corner 5 and the duct sidewall 13 shows a cross-sectional shape similar to that of an airfoil. Because of the reduced air pressure over the curved portion of the duct 3 due to the increased air velocity, a lifting force is created in the direction perpendicular to the axis of rotation. In forward flight, the UAV 1 may benefit from the increased lift due to the increased thickness of the duct at the corners 5. For a UAV 1 in forward flight, a corner 5 located opposite the forward end of the UAV 1 may experience a lifting force at least partially in an upward direction. The corner 5 at the forward end of the UAV 1 may experience lifting force at least partially in a downward direction. However, because the UAV 1 in forward flight may experience air resistance in a direction opposite to the direction of translation because of the airflow that hits the duct corner outside wall 17 for the corner 5 on the forward end of the UAV 1, and to a lesser extent because of airflow that hits the duct corner inside wall 15 for the corner 5 opposite the forward end of the UAV 1, the lateral effect of the air resistance may reduce the negative lift caused by airflow over the corner 5 at the forward end of the UAV 1, and may increase the positive lift of the corner 5 at the end opposite the forward end of the UAV 1. Therefore, the net lifting force may be positive.

Referring to Fig. 2a-e, in an example not covered by the present invention, UAV 10 may have raised corners. The cross section of the duct 31 may be substantially square in a plane perpendicular to the axis of rotation of the fan. Alternatively, the corners 25 may extend further away from the axis of rotation, providing additional storage space in the direction of the plane perpendicular to the axis of rotation.

Because the inner diameter of the duct of the UAV 10 may remain circular and the outer perimeter of the duct 31 may have a substantially square shape, the space between the inner and outer walls of the duct 31 may provide storage space on the UAV 10. The raised corners may provide increased storage over the flat profiled duct 3 of UAV 1. Additionally, if the corners 25 are extended outwardly from the axis of rotation, additional storage space may be obtained at the corners 25 in the direction of the plane substantially perpendicular to the axis of rotation. The duct 31 shown in Figs 2a-d has a substantially square perimeter; however, the duct 31 may have other numbers of corners 25, and may have corners 25 extended outwardly from the axis of rotation.

The UAV 10 of Figs. 2a-d has a fan with fan blades 9, a fan engine 7, stators 11, and landing gear 23 that function as described with respect to Figs. 1a-d.

The duct 31 has duct corners 25 and duct side walls 13. The duct side walls 13 may be thinner than the duct corners 25. Additionally, as shown in Fig. 2b, the corners 25 may be raised in the direction of the axis of rotation. The additional height of the duct 31 in the direction of the axis of rotation provides additional storage for equipment on the UAV 10. The profile of the duct 31 on a plane parallel to the axis of rotation may have positive effects on thrust and fan efficiency, described further with respect to Figs. 2c-d. The increased thickness of the duct corners 25 provides additional storage space for equipment to be stored on the UAV 10.

Fig. 2c and 2d show a side view of the UAV 10 indicating the difference in width of the UAV 10 between the length 12 from one corner 25 to the opposite corner 25, and the length 14 from one duct side wall 13 to the opposite duct side wall 13.

The length 12, from one corner 25 to the opposite corner 25, of the UAV 10 shown in Figs. 2a-d is approximately 25% greater than length 14, from one duct side wall 13 to the opposite duct side wall 13. However, the difference between lengths 12, 14 may vary and may ideally be in the range of 10-40%. The difference between lengths 12, 14 may affect the amount of cargo space located on the UAV 10 in a plane substantially perpendicular to the axis of rotation of the fan. Therefore, the difference between lengths 12, 14 may be varied based on the storage requirements of the UAV 10 and the desired fan performance specifications.

Length 18 of the UAV 10 shown in Figs. 2a-d, between the low point of the duct side wall 13 and the base 16, is approximately 17% greater than length 20, between the top of the corner 25 and the base. The difference between lengths 18, 20 may vary and may be ideally in the range of 5-30%.

The difference between lengths 12, 14 may affect the amount of cargo space located on the UAV 10 in a direction substantially perpendicular to the axis of rotation of the fan. The difference between lengths 18, 20 may affect the amount of cargo space located on the UAV 10 in a direction substantially parallel to the axis of rotation of the fan. Additionally, the difference between lengths 12, 14 and the difference between lengths 18, 20 may affect the airflow, thrust, and efficiency of the fan, discussed further with respect to Fig 2e. Therefore, the difference between lengths 12, 14 and the difference between lengths 18, 20 may be varied based on the storage requirements of the UAV 10 and the desired fan performance specifications.

In laboratory testing, UAV 10 showed improved values for thrust and fuel efficiency over values obtained for a traditional circular duct without duct corners 25. These experiments suggest that providing storage on the UAV 10 inside a square duct with raised corners 25 may enable cargo space to be provided on UAV 10 without significantly negatively affecting the airflow characteristics and fan efficiency of the UAV 10, and may possibly improve the overall performance of the UAV 10. For instance, in laboratory tests on a UAV 10 having dimensions of approximately 14" square and a weight of approximately 18.6 pounds, experimental data indicated that the thrust obtained by UAV 10 improved by 8% in hover mode, and by 16% in forward flight.

The increased thrust may be attributed to the increased speed of the airflow as is flows over the thicker section of the duct corners 5. Because air may travel a longer distance over the raised corner of the duct 31 to the intake of the fan, the airspeed may increase and the pressure at the corners 25 may decrease. Also, because air has a shorter distance to travel over the low, thin duct side wall 13, the airspeed may be relatively slower and the air pressure may be relatively higher than the airspeed and the air pressure at the top of the corners 25. These factors may contribute to the improved overall thrust of the UAV 10.

Because the of the increased storage capacity in the corners 25 of the duct 31, the center of gravity of the UAV 10 may be, depending on the dimensions of the corners 25 and the difference of the lengths 12, 14 and the difference of the lengths 18,20, shifted upwardly relative to the top surface of the duct sidewalls 13. This may provide advantages, in that the overall stability of the UAV 10 may be improved because the tipping moment of the top-mounted engine 7 may be decreased when the UAV 10 is in forward flight. Additionally, the raised corners 25 may provide an ideal place to connect engine mounts for the engine 7. Because locating engine mounts for the engine 7 higher in relation to the base of the engine 7 may provide increased stability due to the decreased tipping moment of the engine 7 when compared to an engine having engine mounts located at the engine 7 base, the engine mounts may be reduced in size. Thus, the overall weight of the UAV 10 may be reduced. Additionally, as discussed with respect to Fig. 2e, the tapered shape of the duct may create lift on the UAV 1 in forward flight.

Fig. 2e shows the cross-section of the duct 3 at the sidewall 13 and the corner 25. The increased thickness of the duct 3 at the corners 25 provides additional storage space for electronics and other equipment on the UAV 10. As air passes over the thicker and taller duct corner 25, the airspeed is increased compared to the air passing over the thinner duct side wall 13. This results in areas of relatively lower pressure and higher airspeed at the duct corners 25, contributing to improved airflow and thrust for the UAV 10. The difference in airspeed and air pressure between the duct 31 at the corner 25 and the sidewall 13 for UAV 10 may be greater than the difference in airspeed and air pressure for the UAV 1 between the corner 5 and the sidewall 13 because of the greater distance the air must travel to reach the intake of the fan.

Additionally, the cross-section view of both the duct corner 25 and the duct sidewall 13 shows a cross-sectional shape similar to that of an airfoil, as described with respect to Fig. 1e. As described with respect to Fig. 1e, because of the reduced air pressure over the curved portion of the duct 31 due to the increased air velocity over the duct corners 25, a lifting force may created in the direction perpendicular to the axis of rotation. In forward flight, the UAV 10 may benefit from the increased lift due to the increased thickness and height of the duct at the corners 25. For the UAV 10 in forward flight, a corner 25 located opposite the forward end of the UAV 10 may experience a lifting force at least partially in an upward direction. The corner 25 at the forward end of the UAV 10 may experience lifting force at least partially in a downward direction. However, because the UAV 10 in forward flight may experience air resistance in a direction opposite to the direction of travel because of the airflow that hits the duct corner outside wall 17 for the corner 25 on the forward end of the UAV 10, and to a lesser extent because of airflow that hits the duct corner inside wall 15 for the corner 25 opposite the forward end of the UAV 10, the lateral force of the airflow may reduce the negative lift caused by airflow over the corner 25 at the forward end of the UAV 10, and may increase the positive lift of the corner 25 at the end opposite the forward end of the UAV 10. Therefore, the net lifting force may be positive.

It should be understood that the illustrated embodiments are examples only and should not be taken as limiting the scope of the present invention. The claims should not be read as limited to the described order or elements unless stated to that effect.

## Claims

1. An unmanned aerial vehicle -UAV- (1) configured for hovering, the UAV comprising:
a fan (7, 9); and
a fan duct (3) defining an inside duct wall having a substantially circular cross-section, and an outside duct wall cooperatively engaged with the inside duct wall to form an at least partially enclosed space;
the fan duct (3) including a plurality of enlarged areas of the at least partially enclosed space,
**characterized in that**
the plurality of enlarged areas extend outwardly in a direction perpendicular to an axis of rotation of the fan (7,9), forming duct corners (5), the fan duct further comprising duct side walls (13) thinner than the duct corners (5),
wherein a first cross-section of the fan duct taken at a duct corner (5) defines a first air foil shape having a first leading edge and a second cross-section of the fan duct taken at a duct side wall (13) defines a second air foil shape having a second leading edge, and
wherein both the first leading edge and the second leading edge are tangent to one single plane that is perpendicular to the axis of rotation of the fan.

2. The UAV of claim 1, wherein a cross-section of the fan duct (3) on a plane substantially perpendicular to the axis rotation of the fan (7, 9) has a substantially square shape.

3. The UAV of claim 1, wherein a first length (2) defines a distance between opposite duct corners (5) and a second length (4) defines a distance between opposite duct side_walls (13), and wherein the first length is greater than the second length.

4. The UAV of claim 3, wherein the first length (2) is 27% greater than the second length (4).

5. The UAV of claim 3, wherein the first length (2) is greater than the second length (4) by an amount within the range of 10% to 40%.

6. The UAV of claim 1, further comprising an engine (7),
wherein the engine (7) drives the fan (7, 9),
wherein the engine (7) is fixed relative to the fan duct (3), and
wherein the engine (7) is located along the axis of rotation of the fan (7, 9) to at least partially compensate for a change to a center of gravity of the UAV caused by weight of equipment located in the plurality of enlarged areas.

7. The UAV of claim 1
wherein the first air foil shape comprises a first trailing edge and the second air foil shape comprises a second trailing edge, wherein the first and second trailing edges are approximately equidistant to the axis of rotation of the fan.

## Patentansprüche

1. Unbemanntes Luftfahrzeug - UAV - (1), die zum Schweben konfiguriert ist, wobei die UAV Folgendes umfasst:
ein Gebläse (7, 9) ; und
eine Gebläseleitung (3), die eine innere Leitungswand, die einen im Wesentlichen kreisförmigen Querschnitt aufweist, und eine äußere Leitungswand, die mit der inneren Leitungswand funktional in Eingriff ist, um einen wenigstens teilweise umschlossenen Raum zu bilden, definiert;
wobei die Gebläseleitung (3) mehrere vergrößerte Bereiche des wenigstens teilweise umschlossenen Raums umfasst,
**dadurch gekennzeichnet, dass**
die mehreren vergrößerten Bereiche sich in einer Richtung senkrecht zu einer Drehachse des Gebläses (7, 9) nach außen erstrecken, wodurch Leitungsecken (5) gebildet werden, wobei die Gebläseleitung ferner Leitungsseitenwände (13) umfasst, die dünner als die Leitungsecken (5) sind,
wobei ein erster Querschnitt der Gebläseleitung an einer Leitungsecke (5) eine erste Tragflügelform mit einer ersten Vorderkante definiert und ein zweiter Querschnitt der Gebläseleitung an einer Leitungsseitenwand (13) eine zweite Tragflügelform mit einer zweiten Vorderkante definiert, und
wobei die erste Vorderkante und die zweite Vorderkante zu einer einzigen Ebene, die zu der Drehachse des Gebläses senkrecht ist, tangential sind.

2. UAV nach Anspruch 1, wobei ein Querschnitt der Gebläseleitung (3) in einer Ebene im Wesentlichen senkrecht zu der Drehachse des Gebläses (7, 9) eine im Wesentlichen quadratische Form aufweist.

3. UAV nach Anspruch 1, wobei eine erste Länge (2) einen Abstand zwischen gegenüberliegenden Leitungsecken (5) definiert und eine zweite Länge (4) einen Abstand zwischen gegenüberliegenden Leitungsseitenwänden (13) definiert und wobei die erste Länge größer als die zweite Länge ist.

4. UAV nach Anspruch 3, wobei die erste Länge (2) um 27 % größer als die zweite Länge (4) ist.

5. UAV nach Anspruch 3, wobei die erste Länge (2) um einen Betrag im Bereich von 10 % bis 40 % größer als die zweite Länge (4) ist.

6. UAV nach Anspruch 1, die ferner einen Motor (7) umfasst,
wobei der Motor (7) das Gebläse (7, 9) antreibt, wobei der Motor (7) in Bezug auf die Gebläseleitung (3) feststehend ist, und
wobei sich der Motor (7) entlang der Drehachse des Gebläses (7, 9) befindet, um eine Änderung eines Masseschwerpunkts des UAV, die durch das Gewicht einer Ausrüstung verursacht wird, die sich in den mehreren vergrößerten Bereichen befindet, wenigstens teilweise zu kompensieren.

7. UAV nach Anspruch 1,
wobei die erste Tragflügelform eine erste Hinterkante umfasst und wobei die zweite Tragflügelform eine zweite Hinterkante umfasst, wobei die erste und die zweite Hinterkante von der Drehachse des Gebläses näherungsweise gleich weit entfernt sind.

## Revendications

1. Véhicule aérien sans pilote - UAV - (1) configuré pour effectuer un vol stationnaire, l'UAV comprenant :
une soufflante (7, 9) ; et
un conduit de soufflante (3) définissant une paroi intérieure de conduit présentant une section transversale sensiblement circulaire et une paroi extérieure de conduit en prise coopérative avec la paroi intérieure de conduit pour former un espace au moins partiellement clos ;
le conduit de soufflante (3) comportant une pluralité de régions élargies dudit espace au moins partiellement clos,
**caractérisé en ce que**
la pluralité de régions élargies s'étendent vers l'extérieur dans une direction perpendiculaire à un axe de rotation de la soufflante (7, 9), en formant des coins de conduit (5), le conduit de soufflante comprenant en outre des parois latérales de conduit (13) plus minces que les coins de conduit (5),
dans lequel une première section transversale du conduit de soufflante effectuée au niveau d'un coin de conduit (5) définit une première forme de profil aérodynamique présentant un premier bord d'attaque et une deuxième section transversale du conduit de soufflante effectuée au niveau d'une paroi latérale de conduit (13) définit une deuxième forme de profil aérodynamique présentant un deuxième bord d'attaque, et
dans lequel le premier bord d'attaque et le deuxième bord d'attaque sont tous deux tangents à un seul plan qui est perpendiculaire à l'axe de rotation de la soufflante.

2. UAV selon la revendication 1, dans lequel une section transversale du conduit de soufflante (3) sur un plan sensiblement perpendiculaire à l'axe de rotation de la soufflante (7, 9) présente une forme sensiblement carrée.

3. UAV selon la revendication 1, dans lequel une première longueur (2) définit une distance entre des coins de conduit (5) opposés et une deuxième longueur (4) définit une distance entre des parois latérales de conduit (13) opposées, et dans lequel la première longueur est supérieure à la deuxième longueur.

4. UAV selon la revendication 3, dans lequel la première longueur (2) est supérieure de 27 % à la deuxième longueur (4).

5. UAV selon la revendication 3, dans lequel la première longueur (2) est supérieure à la deuxième longueur (4) d'une quantité comprise entre 10 % et 40 %.

6. UAV selon la revendication 1, comprenant en outre un moteur (7),
dans lequel le moteur (7) entraîne la soufflante (7, 9),
dans lequel le moteur (7) est fixe par rapport au conduit de soufflante (3), et
dans lequel le moteur (7) est situé le long de l'axe de rotation de la soufflante (7, 9) de façon à compenser au moins partiellement un changement d'un centre de gravité de l'UAV dû au poids de matériel situé dans la pluralité de régions élargies.

7. UAV selon la revendication 1,
dans lequel la première forme de profil aérodynamique comprend un premier bord de fuite et la deuxième forme de profil aérodynamique comprend un deuxième bord de fuite, les premier et deuxième bords de fuite étant à peu près équidistants de l'axe de rotation de la soufflante.
